# DEMANDE DE BREVET EUROPEEN

(11) **EP 1 311 084 A2**
(43) Date de publication de la demande: **14.05.2003**
(21) Numéro de dépôt: 02292670.3
(22) Date de dépôt: 28.10.2002
(51) Int. Cl.: H04L 12/24

(54) **Procédé et dispositif d'analyse d'alarmes provenant d'un réseau de communication**

(30) Priorité: 08.11.2001 FR 0114458
(71) Demandeur: ALCATEL, 75008 Paris (FR)
(72) Inventeur: Marilly, Emmanuel, 92160 Antony (FR); Toure, Famory, 91300 Massy (FR)
(74) Mandataire: Fournier, Michel

(57) **Abrégé**

L'invention permet d'analyser des alarmes (MA) provenant d'un réseau (4), tel qu'un réseau de communications par une étape de transformation des alarmes détectées (MA) en un signal (V(t)) qui exprime une évolution dans le temps d'une valeur numérique représentative de l'ensemble des alarmes détectées.

Cette transformation peut être réalisé par un système à apprentissage, notamment réseau neuronal (6).

Ce signal peut être ensuite analysé par des techniques, notamment une analyse temps/fréquence pour réaliser un diagnostic.

## Description

L'invention concerne un procédé et dispositif d'analyse d'alarmes circulant dans un réseau, ce dernier pouvant être un réseau de télécommunications fibre-optique, filaire, hertzien, ou analogique, ou tout autre type de réseau. Une alarme dans ce contexte se présente sous forme de message qui porte des informations permettant de déceler la cause de l'événement l'ayant provoquée, typiquement une défaillance d'une pièce spécifique, une surcharge locale, une erreur logicielle, etc. De façon générale, un message d'alarme comporte une identification de l'équipement et de son ou ses sous-équipement(s) en cause, son emplacement dans le réseau, le type de défaillance ou d'alerte à donner, par exemple un degré d'urgence, ainsi que la date et l'heure à laquelle elle survient. Un dispositif de diagnostic du réseau assure la gestion et l'analyse de ces alarmes afin d'émettre un diagnostic et agir en conséquence.

A titre purement illustratif, on considérera un réseau de télécommunications, par exemple du type fibre optique SDH (de l'anglais "Synchronous Digital Hierarchy"). L'imbrication des équipements du réseau (noeuds et liens) fait qu'une défaillance ou une alerte partant d'un élément du réseau a généralement des répercussions sur d'autres éléments, qui peuvent alors eux mêmes faire déclencher d'autres alarmes, et ainsi de suite, provoquant des alarmes en avalanche. Il se produit donc une propagation chaotique d'alarmes dans le réseau, à partir de laquelle le dispositif de diagnostic doit identifier l'alarme - ou le groupe d'alarmes - à l'origine, dénommé "alarme racine", afin d'effectuer un diagnostic pertinent pour l'intervention. On rappelle que dans le cas d'un réseau important, le dispositif de diagnostic peut recevoir plusieurs centaines d'alarmes dispersées se mêlant à l'alarme racine.

Dans l'état le l'art, le flux de messages d'alarme est pré-traité par un filtrage visant à éliminer les alarmes redondantes et/ou à rassembler celles qui sont pertinentes.

A cette fin, on met en oeuvre des techniques de corrélation et de diagnostic d'alarmes selon une approche basée soit sur les "symptômes", soit sur une modélisation.

Dans le premier cas, on dépend de symptômes qui correspondent à des relations de fautes pour définir un ensemble de règles pour chaque faute. Ceci est notamment le cas des systèmes experts fondés sur l'intelligence artificielle, qui fonctionnent suivant un ensemble de règles, ainsi qu'avec des techniques dédiées aux systèmes dynamiques fondées sur des chroniques, tels que décrites par Dousson C. dans "Alarm driven supervision for telecommunication networks": II-On-line chronicle recognition" dans Annals of Telecommunications, pages 501-508, octobre 1996, CNET, France.

On obtient alors un diagnostic sous forme de conclusion à tirer de certaines conditions d'alarmes présentes. Par exemple, une règle peut stipuler que si on est en présence de l'alarme A à l'instant t1, l'alarme B à l'instant t2, ..., etc., alors la panne est du type Pi parmi un nombre relativement important de types possibles.

Dans le second cas, on établit un modèle qui décrit le comportement du système pour élaborer un simulateur qui produit les scénarios de fautes pertinents et identifiés. Un exemple de cette approche est décrit dans par Laborie P. et Krivine J-P. dans l'article "Automatic generation of chronicles and its application to alarm processing in power distribution systems", 8^{th} International workshop on diagnosis, Mt. St. Michel, France.

A ce jour, l'approche basée sur les symptômes est préférée du fait qu'elle permet d'introduire des règles empiriques de description de symptômes.

Toutefois, les solutions connues présentent des difficultés au niveau de l'acquisition des connaissances pour le système expert. La mise à jour de cette expertise en fonction de l'évolution du système pose aussi un problème qui doit être pris en compte lorsque des composants sont sujets à des changements fréquents (topologiques ou fonctionnels). Toute modification du champ de formation entraîne une maintenance importante, avec adaptation et modification des règles. Or, le suivi de ces évolutions demande une formation du personnel adaptée à l'intervention sur des systèmes experts. En plus, ces systèmes n'offrent pas de support pour de nouvelles données ou des modifications aux données existantes. Si un événement n'est pas reçu (s'agissant par exemple d'une donnée manquante), la règle devient inapplicable. Autrement dit, les règles ne sont pas "robustes". Par ailleurs, les méthodes n'apprennent rien de leur expérience et s'adaptent difficilement à l'évolution du réseau.

Il en ressort que ces techniques ne sont pas performantes face à une situation d'incertitude et se prêtent mal à une analyse d'un nombre important de données non corrélées, ambiguës, ou incomplètes.

Au vu de ce qui précède, l'invention propose, selon un premier objet, un procédé d'analyse d'alarmes provenant d'un réseau, caractérise en ce qu'il comporte une étape de transformation des alarmes détectées en un signal qui exprime une évolution dans le temps d'une valeur numérique représentative de l'ensemble des alarmes détectées.

Avantageusement, l'étape de transformation est réalisée au moyen d'un système à apprentissage, par exemple un réseau neuronal.

Lorsque chaque alarme est composée de champs de données, on peut répartir les entrées du système à apprentissage en groupements, chaque groupement étant dédié spécifiquement à un champ respectif pris en compte.

Dans ce cas, on peut sélectionner une entrée particulière d'un groupement d'entrées en fonction du contenu du champ auquel ledit groupement est dédié, chaque entrée d'un groupement correspondant à un contenu spécifique d'un champ.

De préférence, on prévoit au moins un groupement d'entrées dédié respectivement à l'un des champs de données de l'alarme suivants :
- un premier niveau de localisation de l'alarme, par exemple le type d'équipement du réseau ;
- un deuxième niveau de localisation de l'alarme, par exemple une pièce d'un équipement ;
- un motif d'alarme ; et
- une indication de priorité.

Dans le mode de réalisation considéré, on applique une alarme détectée en entrée du système à apprentissage en positionnant sélectivement une entrée de chaque groupement d'entrées à un état logique déterminé.

Chaque entrée peut correspondre à un neurone d'entrée du réseau neuronal, les neurones d'entrée étant répartis en groupements d'entrées.

Avantageusement, on procède au préalable à une phase d'apprentissage du système à apprentissage par des étapes de corrélation entre l'entrée et la sortie du système sur la base d'exemples de messages d'alarmes.

Ledit signal est de préférence obtenu sous forme de valeur de mot binaire exprimé par des neurones de sortie du système à apprentissage.

Avantageusement, on prévoit en outre une étape de traitement du signal issu de l'étape de transformation, à partir duquel on extrait une information interprétable.

Ce que ledit traitement peut comprendre une analyse temps/fréquence du signal pour réaliser un diagnostic, par exemple en utilisant une technique de la classe de Cohen.

Selon une option envisagée, on utilise la distribution Wigner Ville pour produire une distribution bilinéaire de l'énergie du signal.

On peut par ailleurs réaliser une localisation des pics dans la distribution obtenue par l'analyse temps/fréquence, à partir desquels on extrait des vecteurs respectifs qui correspondent à des signatures identifiées d'alarmes.

Il est alors possible d'interpréter la distribution en termes de temps et de fréquences selon une échelle linéaire.

Le traitement peut également comprendre une analyse temps/échelle du signal pour réaliser un diagnostic.

Dans ce cas, on peut produire des transformées d'ondelettes pour changer le signal en coefficients qui vont être utilisés pour le diagnostic, par exemple au moyen d'un scalogramme.

Le traitement peut aussi comprendre une analyse fréquentielle seulement, par exemple une analyse de Fourier, du signal pour réaliser un diagnostic à partir du spectre obtenu.

Par exemple, on peut réaliser une localisation des pics dans le spectre, à partir desquels on extrait des vecteurs respectifs qui correspondent à des signatures identifiées d'alarmes.

Selon un deuxième aspect, l'invention concerne un dispositif d'analyse d'alarmes provenant d'un réseau, caractérise en ce qu'il comporte un dispositif de transformation des alarmes détectées en un signal qui exprime une évolution dans le temps d'une valeur numérique représentative de l'ensemble des alarmes détectées.

Ce dispositif peut comprendre en outre des moyens de traitement du signal issu des moyens de transformation, à partir desquels on extrait une information interprétable.

Selon un troisième aspect, l'invention concerne un dispositif selon le deuxième aspect, apte à réaliser le procédé selon le premier aspect.

L'invention et les avantages qui en découlent apparaîtront plus clairement à la lecture de la description qui suit des modes de réalisation préférés, donnée purement à titre d'exemples non-limitatifs par référence aux dessins annexés dans lesquels :
- la figure 1 est un schéma bloc simplifié d'un ensemble d'identification d'alarmes selon un mode de réalisation préféré de l'invention ;
- la figure 2 est un exemple de contenu d'un message d'alarme à gérer par l'ensemble d'identification d'alarmes ;
- la figure 3 est une représentation symbolique des neurones d'entrée du réseau neuronal de l'ensemble d'identification d'alarmes, montrant leur décomposition en groupements de neurones d'entrée, chacun dédié à un champ particulier du message d'alarme ;
- la figure 4 est une représentation graphique du signal V(t) issu en sortie du réseau neuronal de l'ensemble d'identification d'alarmes ; et
- la figure 5 est une représentation de l'information recueillie en sortie de l'unité d'extraction de l'ensemble d'identification d'alarmes, sous forme de "scalogramme".

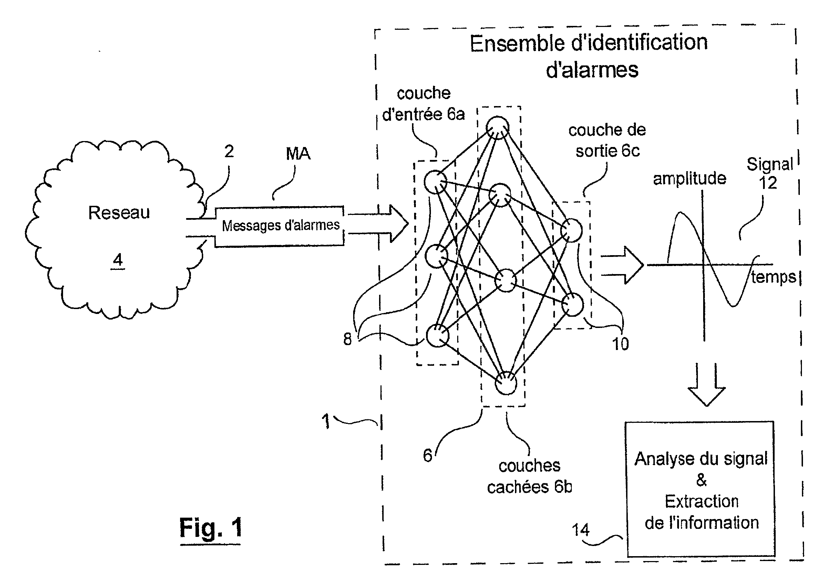

Ainsi que le montre la figure 1, le mode de réalisation prévoit un ensemble d'identification d'alarmes 1 relié à un port d'accès 2 d'un réseau de communication 4, en l'occurrence de type fibre optique SDH. Le port d'accès 2 est adapté pour recueillir tous les messages d'alarme MA circulant dans le réseau 4, et les transmettre à un dispositif de prétraitement. Ce dispositif comprend un réseau neuronal multicouche 6 à rétro-propagation, ou rétro-propagation du gradient de l'erreur, ("feedforward" en terminologie anglo-saxonne), dont la topologie comprend :
- une couche d'entrée 6a constituée d'un nombre Ne de neurones d'entrée 8,
- une ou plusieurs couches cachée(s) 6b, et
- une couche de sortie 6c constituée d'un nombre Ns de neurones de sortie 10, inférieur à Ne.

Dans l'exemple considéré, servant de base didactique, les nombres de neurones d'entrée et de sortie sont respectivement de Ne = 64 et Ns = 5, le réseau 6 comprenant deux couches cachées 6b de 129 neurones chacune. On réduit ainsi fortement le nombre d'alarmes (en passant de 64 à 5 neurones dans l'exemple) par élimination des alarmes non filtrées, redondantes, etc

Les neurones d'entrée et de sortie fonctionnent à deux états binaires 0 et 1, permettant d'exprimer des motifs binaires.

Le réseau neuronal 6 peut être réalisé selon différentes techniques matérielles et logicielles, connues en elles-mêmes. Il peut être facilement adapté à tout réseau 4 dont les alarmes sont à surveiller, notamment en ce qui concerne les nombres de neurones en entrée et en sortie, les fonctions attribuées à chaque neurone, etc.

Les couches 6b intermédiaires réalisent un traitement de la masse d'information présentée à la couche d'entrée 6a, visant à la restituer à la couche de sortie 6c sous forme globalisée, plus facilement compréhensible. L'information issue de la couche de sortie 6c se présente sous la forme d'un signal dynamique 12 bidimensionnel : temps et amplitude, qui contient toutes les informations pertinentes au diagnostic des alarmes, notamment pour l'identification de l'alarme racine à l'origine des différents messages d'alarme. Le réseau neuronal 6 réalise ainsi les fonctions de prétraitement et de corrélation. La corrélation est ici l'extraction d'un vecteur d'alarme, soit la signature de la défaillance ou de l'alerte, qui permet ensuite d'interpréter l'information et de la condenser en même temps.

Des techniques évoluées de traitement de signal peuvent alors agir en aval pour extraire ces informations pertinentes et faciliter le diagnostic.

Ainsi, dans l'exemple, ce signal 12 est présenté à une unité d'analyse du signal et d'extraction de l'information 14, désigné ci après unité d'extraction, qui permet d'obtenir les informations pertinentes concernant notamment l'alarme racine.

Pour une meilleure compréhension des autres spécificités de l'ensemble 1, celles-ci seront décrites dans le cadre d'un exemple concret de fonctionnement.

Chaque message d'alarme MA émis par le réseau 4 est formaté selon un protocole établi qui indique : la date et l'heure du début de message, l'identifiant du type de l'équipement du réseau en cause, soit un premier niveau de localisation, la pièce à l'origine de l'alarme au sein de cet équipement, soit un second niveau de localisation, une brève indication du motif de l'alarme, et une indication de priorité.

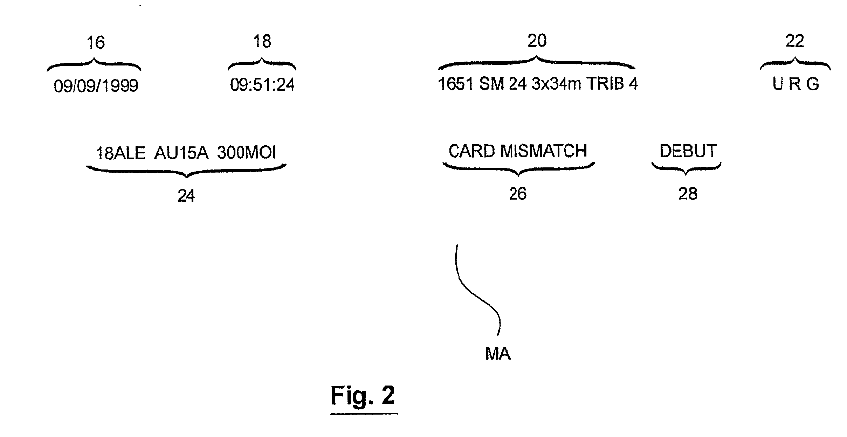

Un exemple de message d'alarme MA selon le format dit "Nectas" est donné en figure 2, où on identifie les champs de date 16, d'heure de la journée 18, de type d'équipement en cause 20, d'indication de priorité 22 ("urgent"), d'identification de la pièce de l'équipement 24, du motif de l'alarme 26 ("Card Mismatch", soit incompatibilité carte), et un indicateur de début de message 28.

Ce message MA est codé en entrée de l'ensemble d'identification 1 en un mot binaire de Ne bits, chacun positionnant l'état logique d'un neurone d'entrée 8 respectif.

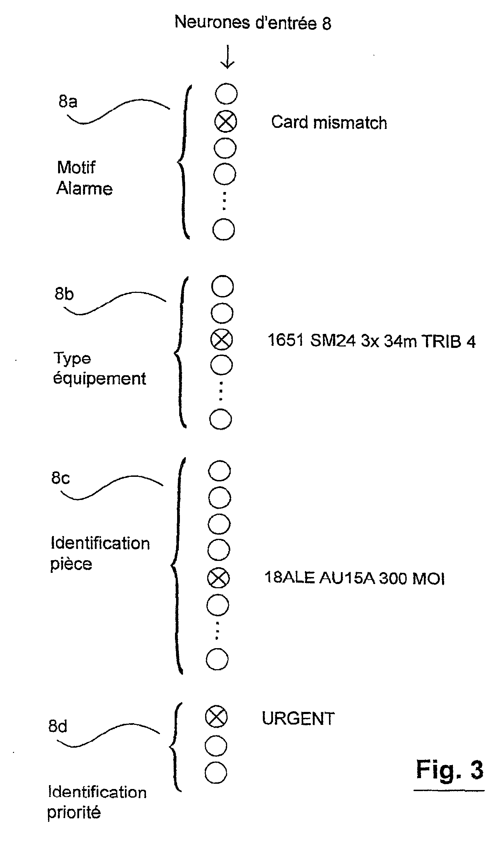

Comme le montre la figure 3, l'organisation du codage et des neurones d'entrée 8 (représentés individuellement par des symboles "O" disposés en colonne) est établi par groupements de neurones 8a à 8d. Chaque groupement de neurones est alloué à un champ déterminé du message MA. Au sein de chaque groupement, il existe un neurone spécifique à un contenu possible du champ correspondant. Lorsque ce contenu apparaît dans le message d'alarme en entrée, le neurone qui lui est attribué est positionné à l'état logique 1 (représenté par un "x" dans le symbole "O" correspondant). Les autres neurones du groupement restent à l'état 0, qui est le positionnement logique par défaut.

Ainsi, un premier groupement 8a de neurones d'entrée 8 dédié au champ de motif d'alarme comporte autant de neurones que de différents motifs d'alarme possibles. De même, un deuxième groupement 8b de neurones d'entrée dédié au champ de type d'équipement comporte un neurone pour chaque type d'équipement possible, un troisième groupement 8c de neurones d'entrée attribué au champ d'identification de pièce comporte un neurone pour chaque identification de pièce possible, et un quatrième groupement 8d de neurones attribué au champ d'indication de priorité comporte un neurone pour chaque niveau de priorité possible.

Chaque message d'alarme MA produit donc son propre motif d'états logiques sur les neurones d'entrée 8, ce motif comprenant un bit à l'état 1 pour chacun des groupements 8a à 8d, comme représenté à la figure 3 pour le cas du message d'alarme MA de la figure 2.

On note que les champs temporels (date 16 et heure de la journée 18) ne sont pas utilisés par le réseau neuronal 6, car ce dernier fonctionne en conservant l'information temporelle, i.e. il a une réponse du type f(t).

En réponse à ce motif d'états logiques, le réseau neuronal 6 produit un autre motif d'états logiques sur ses neurones de sortie 10, dit motif de sortie, qui est fonction :
- du motif d'entrée d'une part, et
- d'un apprentissage préalable d'autre part.

Chaque neurone de sortie est associé à un rang respectif d'un mot binaire de Ns bits, du bit le plus faible au bit le fort. La valeur 0 ou 1 d'un bit du mot binaire est donné par l'état logique du neurone de sortie 10 auquel il est associé. Le mot binaire reproduit alors un nombre V(t) qui évolue dans le temps sur une plage comprenant tous les entiers de 1 à Ns²-1 ainsi que 0.

Le réseau neuronal 6 permet des superpositions d'entrées, soit la présence simultanée de plusieurs motifs différents sur les neurones d'entrée 8 en fonction de la détection d'un nombre correspondant de messages d'alarme concomitants dans le réseau de communication 4. Dans ce cas, plusieurs neurones de chaque groupement 8a-8d seront susceptibles d'être positionnés à l'état logique 1 à un moment donné.

Lors d'une initialisation, on exploite la faculté d'apprentissage des réseaux neuronaux par renforcement des liens entre les neurones. L'apprentissage s'effectue par modification de connexions, en commençant par des exemples. L'objectif est de convertir les messages d'alarmes MA recueillis dans le réseau 4 en un signal 12 (de valeur V(t)) qui peut être interprété.

L'apprentissage du réseau de neurones passe par la connaissance des alarmes possibles. On les réduit, car certaines alarmes ne sont jamais générés dans la pratique. Partant aussi du fait qu'un élément peut générer plusieurs alarmes, on facilite la tâche en associant un neurone à un élément particulier, selon les groupements précités, plutôt qu'à une panne particulière. On note seulement si l'élément est actif au niveau génération d'alarme, et ensuite les types d'alarmes générés.

La principale corrélation effectuée est réalisée au niveau de la série de messages possibles, mais forcément générés, de sorte que l'on retrouve aussi en sortie uniquement les messages qui sont effectivement générés.

L'apprentissage précité permet de tolérer l'absence de quelques données en entrée dans la recherche de l'alarme racine. Par ailleurs, s'il apparaît de nouvelles alarmes non apprises initialement, le réseau pourra néanmoins s'approcher de l'alarme la plus plausible compte tenu des connaissances précédemment acquises.

Le mode de réalisation utilise à cette fin un algorithme supervisé d'apprentissage qui est la pente conjuguée redimensionnée (de la terminologie anglo-saxonne "scaled conjugate gradient". Le motif de formation comporte 79 éléments.

En fonctionnement normal, à l'issu de la phase d'apprentissage, les valeurs V(t) évolutives obtenues en sortie du réseau neuronal 6 constituent une information sur les alarmes reçues.

Elles sont ensuite reprises par l'unité d'extraction 14 où elles sont traitées pour en extraire les informations pertinentes, notamment l'identification de l'alarme racine.

A cette fin, l'unité d'extraction 14 met en oeuvre des techniques d'analyse temps/fréquence, telles que :
- l'utilisation de techniques de la classe de Cohen, et en particulier la distribution de Wigner Ville pour produire une distribution bilinéaire de l'énergie du signal. Ces techniques permettent d'obtenir des représentations temps/fréquence en décomposant l'énergie du signal. Les résultats obtenus au moyen de cette distribution sont interprétables en termes de données temporelles et fréquentielles selon une échelle linéaire. Ces techniques sont adaptées pour traiter à la fois une information temporelle et une information de fréquence et/ou ;
- l'utilisation de techniques d'analyses d'échelles de temps, et plus particulièrement selon lesquelles des transformées d'ondelettes (généralement connues par le terme anglo-saxon de "wavelet") changent le signal en coefficients qui peuvent être utilisés pour l'analyse et l'interprétation. Elles permettent d'obtenir des représentations temps/échelle (pavage dans le plan temps/fréquence, par regroupement des transformées en ondelettes. Le "scalogramme" appartient à cette classe de techniques d'analyse d'échelles dans le temps. Cette analyse utilise les propriétés de résolution des transformations d'ondelettes. Il est cependant possible d'appliquer d'autres techniques qui permettent de définir un niveau de résolution dans la décomposition de signal visant à faire ressortir uniquement des alarmes particulières d'intérêt.

On peut également utiliser une technique uniquement fréquentielle, telle que l'analyse de Fourier ou analogues, appliquée sur une fenêtre du signal. Par exemple, à partir d'une sinusoïde on obtient un spectre avec un pic qui correspond à la fréquence qui apparaît le plus souvent dans le signal V(t). En associant au préalable ce pic à une panne, celle-ci pourra être ainsi identifiée dans le réseau. On note que l'analyse de Fourier ne s'applique que sur une section du signal. L'analyse de Fourier est l'une des techniques les plus simples à mettre en oeuvre et convient aux cas simples. Elle ne prend pas en compte l'aspect temporel du signal.

Le diagnostic final est réalisé soit directement à partir de l'observation des résultats de ces outils d'analyse, soit à l'aide d'un autre outil. Ce dernier peut utiliser encore un réseau neuronal ou la quantisation vectorielle (ou autre) pour classifier et fournir le résultat.

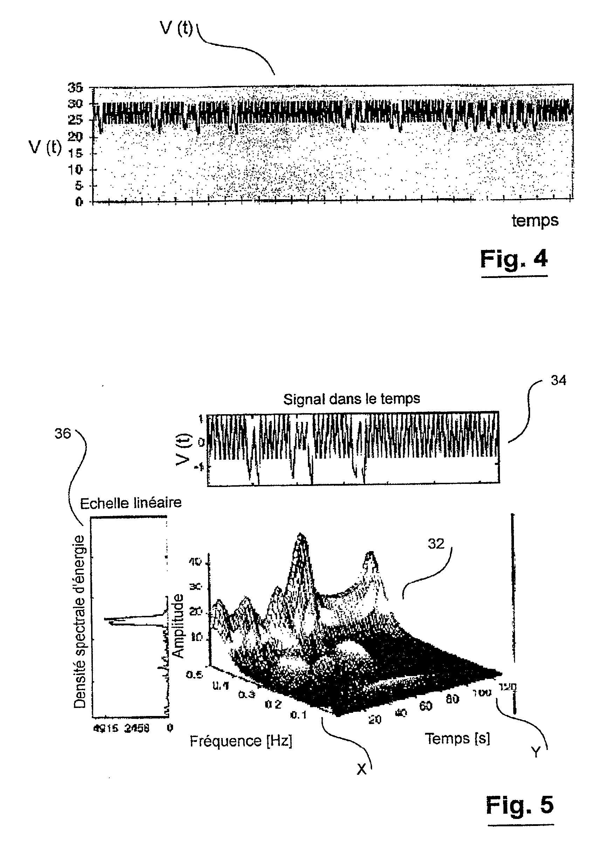

A titre d'exemple, la figure 4 représente l'évolution dans le temps du signal V(t) (en ordonnée) produite en sortie du réseau neuronal 6 sur une échelle de plusieurs minutes (en abscisse). L'échantillon représenté correspond à une situation d'alarme provoquée par le rupture d'une fibre reliant deux équipements dans le réseau fibre-optique du type SDH, provoquant des centaines de messages d'alarme. Pour une meilleure lisibilité, les transitions discontinues des valeurs V(t) sont reliées pour formé un tracé d'aspect continu ; on parle alors d'un signal V(t), qui sera soumis à une analyse selon l'une des techniques d'analyse temps-fréquence précitées.

La figure 5 illustre le résultat d'une analyse d'ondelettes de Morlet sur le signal V(t). Elle comporte trois représentations, à savoir :
- une représentation tridimensionnelle 32, dite "scalogramme", où apparaît la fréquence (Hz) et le temps (s) sur deux axes orthogonaux (respectivement x et y) d'un plan horizontal, et l'amplitude sur un troisième axe (z) perpendiculaire à ce plan. Il s'agit donc d'une représentation bilinéaire du signal avec ses pics correspondant aux informations pertinentes du signal ;
- une représentation 34 de l'évolution dans le temps du signal temporel V(t) qui va être analysé ; et
- une représentation 36 de la densité spectrale d'énergie en fonction de l'amplitude, soit le spectre du signal temporel V(t) qui va être analysé.

L'intérêt de la représentation globale de la figure 5 est de permettre de voir non seulement la distribution bilinéaire avec ses pics, mais aussi de voir l'utilité d'une représentation temps/fréquence par rapport à la représentation temporelle ou spectrale. On a ainsi une information beaucoup plus riche à exploiter. Toutefois, dans certains cas, le spectre suffit à l'analyse.

La localisation des maximas de la distribution permet d'extraire un vecteur correspondant à la signature de la panne. Ce vecteur permet donc d'identifier la panne.

De manière générale, d'autres formes de représentations peuvent être envisagées suivant la méthode d'analyse utilisée au niveau de l'unité d'analyse 14. On peut en effet utiliser, entre autres, une représentation spectrale, une représentation temps/fréquence (distribution de l'énergie du signal dans un plan bivarié temps/fréquence, par exemple selon la distribution de Wigner-Ville), ou d'une représentation temps/échelle, dont le scalogramme est un exemple.

On note que les informations pertinentes contenues dans le signal V(t) correspondent aux pics dans la représentation temps-fréquence. La localisation des pics de maxima peut être extraite. Chaque pic donne un vecteur (moment dans le temps, fréquence et localisation de l'énergie). Ces vecteurs correspondent aux signatures des défaillances et sont utilisés pour effectuer le diagnostic.

De manière générale, on applique des techniques spatio-temporelles afin de voir l'évolution des fréquences et extraire une signature particulière correspondant à une panne. On ne gère alors plus des messages individuels, mais une représentation (ou un motif) qui permet de reconnaître une panne en termes de fréquence temporelle, fréquence spatial, et d'amplitude, soit une énergie (cf. exemple de la figure 5). L'ensemble de ces paramètres constitue un vecteur corrélé à une série d'alarmes présentes dans le réseau de communication 4.

L'alarme racine peut être décelée à partir du vecteur. Par exemple, dans un cas simplifié, une sinusoïde peut représenter l'arrivée d'une alarme exprimant par ses ondelettes l'alternance de débuts et de fins d'alarmes. On applique à cette sinusoïde une transformation de Fourier ou analogue qui donnera, au niveau spectre, une fréquence donnée avec un pic d'amplitude. Ce dernier correspondra à l'oscillation de débuts et de fins d'alarmes. On peut corréler l'ensemble de ces pics pour identifier l'alarme racine. On remarque à ce propos que la représentation visuelle dans laquelle apparaît des pics bien identifiés est beaucoup plus facile à appréhender par un opérateur humain qu'une masse de données chiffrées.

De ce qui précède, on comprend que le processus de diagnostic venant d'être décrit s'opère ainsi sur deux étapes :
- d'abord par le réseau de neurones 6, qui effectue un prétraitement permettant d'obtenir la corrélation des alarmes, et qui traduit ces alarmes en une succession de valeurs V(t) porteuse d'informations fréquentielles et temporelles ; et
- ensuite, par l'unité d'extraction 14 qui réalise un traitement de ces valeurs V(t) permettant d'obtenir une interprétation facile des alarmes.

Il apparaît que l'ensemble d'identification d'alarmes 1 est remarquable sur plusieurs plans :
- il tolère dans une certaine mesure l'absence d'un ou de plusieurs messages d'alarme MA. En effet, les techniques d'analyse de spectre utilisées opèrent sur des données statistiques telles que des moyennes, ou un ensemble de fenêtres, qui donnent des facilités pour réagir face à des informations manquantes ;
- les deux techniques utilisées (réseau neuronal et analyse de sortie) concourent à la robustesse. Dans le cas du réseau neuronal 6, l'apprentissage permet de reconnaître des schémas en entrée même lorsqu'ils sont imparfaits ou incomplets ;
- il met à profit les avantages des réseaux neuronaux, notamment leur fonctionnement à architecture parallèle, avec représentation distribuée de la connaissance, et apprentissage par modification des connexions ;
- il permet d'obtenir de bons résultats même avec des donnés imparfaites ou ambiguës. L'approche est à la fois robuste et permet une bonne généralisation. La perte de certains messages n'entraîne pas une modification significative du signal et ne dégrade pas le processus de diagnostic ;
- l'emploi de réseaux neuronaux procure une méthode rapide et efficace pour réaliser la corrélation des alarmes, par une approche probabiliste. Le comportement du réseau neuronal permet d'obtenir une visualisation complète de toutes les alarmes actives à tout moment ;
- la représentation temps-fréquence permet d'identifier les éléments caractéristiques du comportement du signal. Cette identification est plus robuste que les règles, et la propriété de résolution de la transformation d'ondelettes apporte plus d'avantages.

On peut envisager de nombreuses variantes tout en restant dans le cadre de l'invention, ces variantes pouvant concerner notamment : le réseau dont les alarmes sont à analyser, les messages d'alarme, le type de système d'apprentissage, tel qu'un réseau neuronal ou analogue mis en oeuvre (nombre de neurones, structure des couches, interconnexions, technologie de réalisation, etc.), les techniques d'apprentissage du réseau, le traitement du signal en sortie du réseau neuronal pour obtenir le diagnostic, les critères d'évaluation des alarmes, etc.

## Revendications

1. Procédé d'analyse d'alarmes (MA) provenant d'un réseau (4), **caractérise en ce qu'**il comporte une étape de transformation des alarmes détectées (MA) en un signal (V(t)) qui exprime une évolution dans le temps d'une valeur numérique représentative de l'ensemble des alarmes détectées.

2. Procédé selon la revendication 1, **caractérisé en ce que** l'étape de transformation est réalisée au moyen d'un système à apprentissage (6).

3. Procédé selon la revendication 1 ou 2, **caractérisé en ce que** l'étape de transformation est réalisée au moyen d'un réseau neuronal (6).

4. Procédé selon la revendication 2 ou 3, **caractérisé en ce que**, chaque alarme étant composée de champs de données (16-28), on répartit les entrées (8) du système à apprentissage (6) en groupements (8a-8d), chaque groupement étant dédié spécifiquement à un champ respectif pris en compte.

5. Procédé selon la revendication 4, **caractérisé en ce que** l'on sélectionne une entrée (8) particulière d'un groupement (8a-8d) d'entrées en fonction du contenu du champ auquel ledit groupement est dédié, chaque entrée d'un groupement correspondant à un contenu spécifique d'un champ.

6. Procédé selon la revendication 5, **caractérisé en ce que** l'on prévoit au moins un groupement (8a-8d) d'entrées dédié respectivement à l'un des champs de données de l'alarme (MA) suivants :
- un premier niveau de localisation de l'alarme, par exemple le type d'équipement du réseau (20) ;
- un deuxième niveau de localisation de l'alarme, par exemple une pièce d'un équipement (24) ;
- un motif d'alarme (26) ; et
- une indication de priorité (22).

7. Procédé selon l'une quelconque des revendications 4 à 6, **caractérisé en ce que** l'on applique une alarme détectée (MA) en entrée du système à apprentissage (6) en positionnant sélectivement une entrée (8) de chaque groupement (8a-8d) d'entrées à un état logique déterminé.

8. Procédé selon la revendication 3 et l'une quelconque des revendications 4 à 7, **caractérisé en ce que** chaque entrée (8) correspond à un neurone d'entrée du réseau neuronal, les neurones d'entrée étant répartis en groupements (8a-8d) d'entrées.

9. Procédé selon l'une quelconque des revendications 2 à 8, **caractérisé en ce que** l'on procède au préalable à une phase d'apprentissage du système à apprentissage (6) par des étapes de corrélation entre l'entrée (6a) et la sortie (6c) du système sur la base d'exemples de messages d'alarmes (MA).

10. Procédé selon l'une quelconque des revendications 2 à 9, **caractérisé en ce que** ledit signal (V(t)) est obtenu sous forme de valeur de mot binaire exprimé par des neurones de sortie (10) du système à apprentissage (6).

11. Procédé selon l'une quelconque des revendications 1 à 10, **caractérisé en ce qu'**il comporte en outre une étape de traitement (14) du signal (V(t)) issu de l'étape de transformation, à partir duquel on extrait une information interprétable.

12. Procédé selon la revendication 11, **caractérisé en ce que** ledit traitement comprend une analyse temps/fréquence dudit signal (V(t)) pour réaliser un diagnostic.

13. Procédé selon la revendication 12, **caractérisé en ce que** l'on réalise ladite analyse temps/fréquence par une technique de la classe de Cohen.

14. Procédé selon la revendication 13, **caractérisé en ce que** l'on utilise la distribution Wigner Ville pour produire une distribution bilinéaire de l'énergie dudit signal (V(t)).

15. Procédé selon l'une quelconque des revendications 12 à 14, **caractérisé en ce que** l'on réalise une localisation des pics dans la distribution obtenue par l'analyse temps/fréquence, à partir desquels on extrait des vecteurs respectifs qui correspondent à des signatures identifiées d'alarmes.

16. Procédé selon la revendication 15, **caractérisé en ce que** l'on interprète ladite distribution en termes de temps et de fréquences selon une échelle linéaire.

17. Procédé selon la revendication 11, **caractérisé en ce que** ledit traitement comprend une analyse temps/échelle dudit signal (V(t)) pour réaliser un diagnostic.

18. Procédé selon la revendication 17, **caractérisé en ce que** l'on produit des transformées d'ondelettes pour changer ledit signal (V(t)) en coefficients qui vont être utilisés pour le diagnostic, par exemple au moyen d'un scalogramme.

19. Procédé selon la revendication 11, **caractérisé en ce que** ledit traitement comprend une analyse fréquentielle seulement, par exemple une analyse de Fourier, dudit signal (V(t)) pour réaliser un diagnostic à partir du spectre obtenu.

20. Procédé selon la revendication 19, **caractérisé en ce que** l'on réalise une localisation des pics dans le spectre, à partir desquels on extrait des vecteurs respectifs qui correspondent à des signatures identifiées d'alarmes.

21. Dispositif d'analyse d'alarmes provenant d'un réseau (4), **caractérise en ce qu'**il comporte un dispositif de transformation des alarmes détectées (MA) en un signal (V(t)) qui exprime une évolution dans le temps d'une valeur numérique représentative de l'ensemble des alarmes détectées.

22. Dispositif selon la revendication 21, **caractérisé en ce qu'**il comprend en outre des moyens de traitement (14) du signal (V(t)) issu des moyens de transformation, à partir desquels on extrait une information interprétable.

23. Dispositif selon l'une quelconque des revendications 21 ou 22, apte à réaliser le procédé selon l'une quelconque des revendications 1 à 20.
